# EUROPEAN PATENT APPLICATION

(11) **EP 4 822 780 A1**
(43) Date of publication of application: **14.10.2026**
(21) Application number: 23960854.0
(22) Date of filing: 08.12.2023
(51) Int. Cl.: H01M 4/525, H01M 4/36, H01M 4/505, H01M 10/058, H01M 50/55

(54) **SECONDARY BATTERY AND METHOD FOR MANUFACTURING SAME**

(71) Applicant: Vehicle Energy Japan Inc., Hitachinaka-shi, Ibaraki 312-8505 (JP)
(72) Inventor: TOOYAMA, Tatsuya, Hitachinaka-shi, Ibaraki 312-8505 (JP); MIKI, Takeshi, Hitachinaka-shi, Ibaraki 312-8505 (JP)
(74) Representative: Strehl & Partner mbB
(86) International application number: PCT/JP2023/044015
(87) International publication number: WO 2025/120843

(57) **Abstract**

A secondary battery in which a positive electrode 11 including a positive electrode active material and a negative electrode 12 including a negative electrode active material are stacked with a separator 13 interposed therebetween, in which the positive electrode active material includes a mixture of a first active material having an average particle diameter (D50, a median diameter) of 10 to 20 µm, a second active material having the average particle diameter (D50, the median diameter) of 3 to 5 µm, and a third active material having the average particle diameter (D50, the median diameter) larger than that of the second active material and having a tap density lower than that of the second active material. As a result, it is possible to provide a secondary battery that is excellent in output characteristics as well as a high energy density of the battery due to a high density of the positive electrode.

## Description

### Technical Field

The present disclosure relates to a battery.

### Background Art

In the automobile industry, fuel efficiency regulations and environmental regulations are strengthened in each country and region. In order to comply with these regulations, electric vehicles powered by batteries that do not emit carbon dioxide are beginning to become popular. In addition, a PHEV (Plug-in Hybrid Electric Vehicle) and an HEV (Hybrid Electric Vehicle) using both an internal combustion engine and a battery as a power source, which emit less carbon dioxide, are widely used in some cases. In both systems, a development of high-performance batteries is a key to improving efficiency.

Patent Literature 1 describes a relationship between an average particle diameter of active material particles and a particle decay rate, which enables an improvement in a volume density of an active material in a positive electrode. Patent Literature 2 describes a relationship among a particle structure, an average particle diameter, a tap density, an average aspect ratio of voids, a weight ratio and the like as a positive electrode active material capable of increasing a capacity and an output of a lithium ion secondary battery.

### Citation List

### Patent Literature

[Patent Literature 1] Japanese Patent Application Laid-Open No. 2017-107727
[Patent Literature 2] Japanese Patent Application Laid-Open No. 2021-120937

### Summary of Invention

### Technical Problem

In an electric vehicle, a secondary battery having a sufficient energy density and excellent output characteristics is required. The present disclosure has been made in view of such problems, and an object of the present disclosure is to provide a secondary battery having a high output while ensuring a high energy density of a cell due to a high density of a positive electrode.

### Solution to Problem

The present disclosure solves the above problems, and a main means is as follows. That is, a secondary battery is characterized that the positive electrode active material is a mixture of a first active material having an average particle diameter (D50, a median diameter) of 10 to 20 µm, a second active material having the average particle diameter (D50, the median diameter) of 3 to 5 µm, and a third active material having the average particle diameter (D50, the median diameter) larger than that of the second active material and having a tap density lower than that of the second active material.

According to another aspect of the present disclosure, in addition to the above configuration, the secondary battery is characterized that a positive electrode active material layer has a configuration that the positive electrode active material is mixed such that the weight ratio is (the first active material) > (the second active material) > (the third active material).

According to still another aspect of the present disclosure, the secondary battery is characterized that a charge/discharge body in which the positive electrode and the negative electrode are stacked has an exposed first side surface, and a first tab connected to the positive electrode and a second tab connected to the negative electrode are present on the first side surface, and the charge/discharge body is contained in a battery container having a plurality of surfaces including a first surface, and a first terminal and a second terminal are disposed on the first surface, and the first surface and the first stacked surface are opposed to each other.

### Advantageous Effects of Invention

According to the present disclosure, it is possible to provide a secondary battery that is excellent in an output characteristics as well as has a high energy density of the battery due to high density of the positive electrode.

### Brief Description of Drawings

FIG. 1 is a schematic diagram defining a first active material 1, a second active material 2, and a third active material 3.
FIG. 2 is a graph showing a relationship between a tap density and an electrode density in a specific positive electrode active material.
FIG. 3 is a table showing a configuration of embodiments and comparative examples of the present disclosure and a battery performance.
FIG. 4 is a perspective view showing an appearance of a battery 5.
FIG. 5 is a perspective view illustrating structural members around a negative electrode terminal 42 of the battery 5 in a cross section.
FIG. 6 is a perspective view illustrating structural members around a positive electrode terminal 41 of the battery 5 in a cross section.
FIG. 7 is an exploded perspective view of the battery 5.
FIG. 8 is a perspective view showing a charge/discharge body 10 of the battery 5.
FIG. 9 is a perspective view showing details of a lid of the battery 5.
FIG. 10 is a cross-sectional view illustrating a method for manufacturing a positive electrode.
FIG. 11 is a cross-sectional view showing a separatorless battery.
FIG. 12 is a detailed cross-sectional view showing a separatorless battery.

### Description of Embodiments

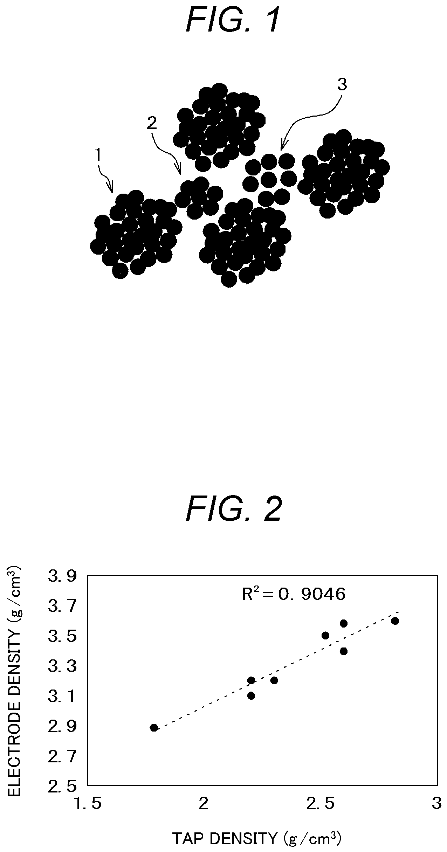

The configuration of the battery 5 will be described with reference to FIG. 1 to FIG. 9. A feature of the present disclosure is a configuration of a positive electrode, which will be described in detail in the following description of a configuration of a battery. The battery 5 includes a charge/discharge body 10 for charging and discharging electricity, a current collector 20 connected to the charge/discharge body 10, a current interrupter 30 connected to the current collector 20, and an external terminal 40 connected to the current collector 20 and the current interrupter 30 as main constituent members, and the constituent members of the battery 5 are accommodated or attached to an exterior body 50.

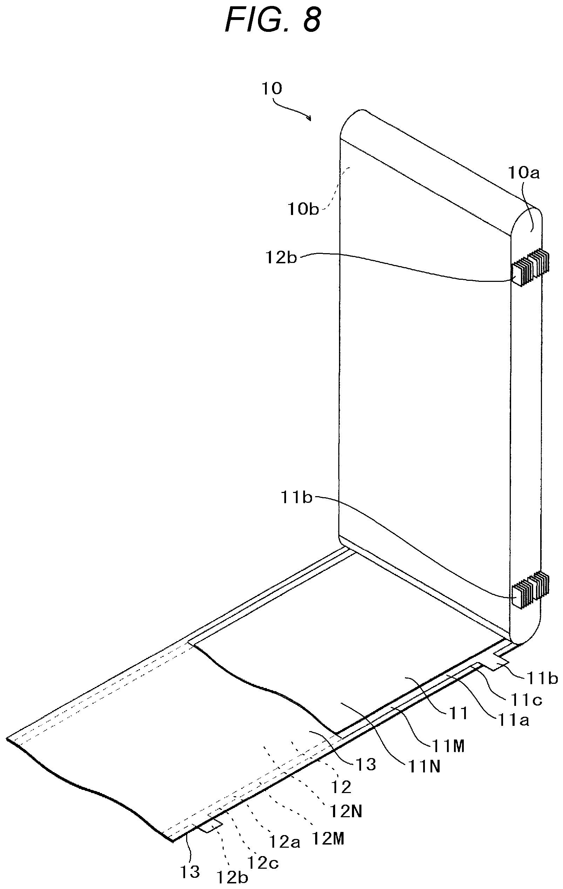

FIG. 8 is a perspective view of the charge/discharge body 10. The charge/discharge body 10 charges and discharges electricity. The charge/discharge body 10 includes a positive electrode 11, a negative electrode 12, a separator 13, and an electrolyte. In FIG. 8, the positive electrode 11 includes an elongated positive electrode current collector layer 11M and a positive electrode active material layer 11N bonded to the positive electrode current collector layer 11M. The positive electrode current collector 11M includes a current collector 11a and a positive electrode tab 11b. The positive electrode active material layers 11N are bonded to the current collector 11a. The positive electrode tab 11b protrudes in a short side direction of the current collector 11a from a side edge 11c along a long side direction of the current collector 11a. The positive electrode tab 11b is formed integrally with the current collector 11a. A plurality of positive electrode tab 11b are formed on one current collector 11a. The current collector 11a is formed of, for example, aluminum or an aluminum alloy.

The positive electrode active material layer 11N contains a positive electrode active material represented by the following formula (1):

Li₁₊ₓM^{A}O₂ (1)

(In the formula, X satisfies -0.15 ≤ X ≤ 0.15, and M^{A} represents an element group containing at least one selected from the group consisting of Mn and Al, Ni, and Co.)

When -0.15 ≤ X ≤ 0.15, the positive electrode active material has a high true density and a high reversibility. That is, it has a high battery capacity and excellent cycle characteristics.

Since M^{A} includes at least one selected from the group consisting of Mn and Al in addition to Ni and Co, the positive electrode active material has a high thermal stability and a high stability in a high potential condition. Accordingly, the lithium ion secondary battery has a high safety.

M^{A} may further include at least one selected from the group consisting of Zr, Ti, Cr, Fe, Cu, Zn, Ge, Sn, Mg, Ag, Ta, Nb, B, P, Ca, Sr and Ba. When M^{A} contains Zr, the internal resistance of the lithium ion secondary battery at a low temperature is reduced. The content of Zr may be 0.1 to 2.0 mol%, in particular 0.2 to 1.0 mol, relative to the total amount of Ni, Co, Mn and Al. In addition, a ratio of elements other than Ni, Co, Mn and Al in all the elements constituting M^{A} is, for example, 10 mol% or less, particularly 3 mol% or less. Accordingly, the lithium ion secondary battery can have a sufficient discharge capacity.

The amounts of the respective elements in the positive electrode active material can be measured by an ICP (Inductive Coupled Plasma) method. When the amount of the element in the positive electrode active material is dismantled from the battery and examined, the battery before being dismantled is discharged to, for example, 2.7 V, then dismantled, and the positive electrode active material is taken out. The positive electrode active material taken out is melted by, for example, an oxidative decomposition method or an alkaline solution decomposition method, and is measured by the ICP method.

The positive electrode active material contains three or more kinds having different average particle diameters. When these are referred to as a first active material 1 having the largest average particle diameter, a second active material 2 having the smallest average particle diameter, and a third active material 3 having the second largest average particle diameter are used, voids between the particles of the first active material can be efficiently filled with the particles of the second active material and the particles of the third active material. Therefore, when the positive electrode active material for the lithium ion secondary battery includes the third active material, the positive electrode can be made denser.

The average particle diameter of the positive electrode active material is 10 µm or more and 20 µm or less in the average particle diameter (D50, median diameter) of the first active material, and 3 µm or more and 5 µm or less in the average particle diameter (D50, median diameter) of the second active material. The average particle diameter (D50, median diameter) of the third active material is smaller than the average particle diameter (D50, median diameter) of the first active material and larger than the average particle diameter of the second active material.

FIG. 1 is a schematic cross-sectional view of a positive electrode in a state where the first active material 1, the second active material 2, and the third active material 3 are mixed. In FIG. 1, the second active material 2 and the third active material 3 are present between the first active materials 1 having the largest particle diameter, whereby a positive electrode density can be increased. That is, an energy density of the battery can be improved.

As shown in FIG. 1, the first active material 1, the second active material 2, and the third active material 3 are secondary particles in which primary particles are aggregated. In FIG. 1, the density of the primary particles of the third active material 3 is smaller than a tap density of the secondary particles of the first active material 1 and the second active material 2.

Such a configuration can also be manufactured by changing the materials constituting the first active material 1 and the second active material 2 and the third active material 3. For example, the first active material and the second active material may contain Ni in an amount of 60 mol% or more, and the third active material may contain Ni in an amount of less than 60 mol%. Varying the material increases the flexibility of material combinations to achieve the desired properties. Alternatively, even if the material constituting the first active material 1 and the second active material 2 and the third active material 3 are the same material, the configuration can be realized by changing the manufacturing method. Since the same material can be used, it has an excellent economical efficiency. In addition, since the basic characteristics are the same, handling becomes easy.

When the first active material 1, the second active material 2, and the third active material 3 are manufactured by a crystallization method, there are a nucleation step and a particle growth step, but such a configuration can be manufactured by changing the nucleation step of the third active material 3 from the nucleation step of the first active material 1 and the nucleation step of the second active material 2. Even when the raw material is crushed by a ball mill or the like, mixed, and fired under a certain condition to form an active material, the structures of the first active material 1 and the second active material 2 and the third active material 3 can be changed by changing the conditions such as mixing and firing.

The tap density of the third active material 3 is smaller than the tap density of the second active material 2. In general, the larger the particle diameter, the larger the van der Waals force and the larger the tap density. However, in the present disclosure, by making the tap density of the third active material 3 having the second largest average particle diameter smaller than the tap density of the second active material 2, the electrolyte can permeate uniformly into the positive electrode even when the positive electrode is highly filled, and thus the output characteristics can be enhanced.

In the positive electrode active material layers 11N, the positive electrode active material is mixed so that the weight ratio is such that (the first active material) > (the second active material) > (the third active material). The first active material 1, the second active material 2, and the third active material 3 are mixed, a conductive material and a binder are added to form a paste, dried, and then pressed by, for example, a roller press by, for example, a linear pressure of 100 N/mm to compress the thickness to about 95. Even in such a state, the third active material 3 does not disintegrate, and 80 % or more of the third active material 3 maintains the shape of the secondary particles.

That is, even after the positive electrode active material layers 11N are pressed, the first active material 1, the second active material 2, and the third active material 3 can be distinguished. For example, it can be determined by taking a cross-sectional photograph of the positive electrode active material layers 11N with an SEM. When the battery is disassembled to check 11N of the positive electrode active material layers, the battery prior to disassembly is discharged to, for example, 2.7 V, and then disassembled. Then, a plurality of SEM photographs of the cross section of the positive electrode active material layers 11N are taken to confirm the presence of the first active material 1, the second active material 2, and the third active material 3. Thereafter, the binder and the conductive material are removed, and the tap densities of the first active material 1, the second active material 2, and the third active material 3 are measured. The same applies to the weight ratio of the first active material 1, the second active material 2, and the third active material 3. It is assumed that the voltage between terminals in the fully charged state is 4.2 V and the voltage between terminals in the fully discharged state is 2.7 V.

The average particle diameter of the positive electrode active material can be measured by a laser diffraction/scattering particle size distribution measuring apparatus, for example. In this case, the positive electrode active material is extracted from the positive electrode active material layer 11N, and the particle size distribution is measured. When the particle diameter of the positive electrode active material is measured by disassembling the battery, the battery is discharged to, for example, 2.7 V, and then the battery is disassembled, the positive electrode active material is extracted from the positive electrode mixture, and the particle size distribution is measured.

The tap density of the positive electrode active material is obtained by mechanically tapping a measuring cylinder or a container containing a powder sample. After measuring an initial mass of the powder, the measuring graduated cylinder or container is mechanically tapped, and the volume is read when there is almost no change in the volume, and the tap density is calculated from the initial mass and the final volume.

FIG. 2 is a graph showing a relationship between the tap density and the electrode density of the positive electrode mixture after being pressed for specific particles. As shown in FIG. 2, in the case of the same particle group, the tap density and the electrode density are in a proportional relationship. In FIG. 2, R² is a parameter called a determination factor. Since the positive electrode active material 11N includes three types of positive electrode active materials, the electrode density is a weighted average of the respective active materials. The electrode density can be estimated depending on the proportion of the active material having a predetermined tap density. That is, the energy density of the battery can be designed. In addition, it is possible to design a high-rate battery by controlling the ratio of the third active material 3 having a small tap density.

In order to increase the tap density of the positive electrode active material, there is a method of combining positive electrode materials having different particle size distributions. However, in the related art, a sufficient energy density cannot be realized. In addition, there is also a technique of using a material having a high disintegration property for one kind of positive electrode active member, collapsing the positive electrode active material layer when pressing, and filling the voids between particles with collapsed particles, but this method has a risk that an electronic conduction network collapses and the input/output characteristics deteriorate. In addition, there is a risk of deterioration in life characteristics.

From the viewpoint of improving the input and output of the battery, there is also a means for improving the performance by increasing a specific surface area of the conductive auxiliary agent for the positive electrode and by making it fibrous. However, when this means is used, a handleability of a slurry for forming the positive electrode mixture is deteriorated. In addition, a unit price of the positive electrode mixture increases.

On the other hand, the above-described configuration of the present disclosure can realize a battery having a high positive electrode density, that is, a high energy density and a high input-output property, by a relatively simple configuration in which the positive electrode active material is the mixture of the first active material 1 having the average particle diameter (D50, median diameter) of 10 µm or more and 20 µm or less, the second active material 2 having the average particle diameter (D50, median diameter) of 3 µm or more and less than 5 µm, and the third active material 3 having the average particle diameter (D50, median diameter) larger than the second active material 2 and the tap density lower than the second active material 2.

For example, the first active material 1 and the second active material 2 have a large difference in the particle diameter, and the tap density of the second active material is larger than that of the third active material. Thus, the battery characteristics obtained by a high-density packing can be utilized. The third active material has the lower tap density than the second active material. The average particle diameter is larger than that of the second active material. This allows the active material to have particles with a low packing density but still have a capacity, and thus makes it easy to obtain the output characteristics that are different from those of the above-described structure. For example, the higher input/output characteristics can be utilized. Further, in order to obtain the more preferable output characteristics, it is preferable that the third active material has the tap density lower than the first active material. Alternatively, the average particle diameter of the third active material is preferably larger than that of the first active material.

In this embodiment, a filling degree (or a void fraction) of the first active material, the second active material, and the third active material was compared using the tap density. The tap density is preferred in evaluating the actual state, on the other hand, when the tap density is difficult to measure, the density or filling ratio (the void fraction) may be compared, for example, by a method of measuring the known density or filling ratio (the void fraction). In this case, the above-mentioned "third active material 3 whose average particle diameter (D50, median diameter) is larger than the second active material 2 and whose tap density is lower than the second active material 2" may be a "third active material 3 whose average particle diameter (D50, median diameter) is larger than the second active material 2 and whose density is lower than that of the second active material 2" when compared at another density, and a "third active material 3 whose average particle diameter (D50, median diameter) is larger than that of the second active material 2 and whose void fraction is larger than that of the second active material 2" when compared at the void fraction.

When the void fraction of the positive electrode active material, which is a porous secondary particle, contained in the positive electrode active material is compared, for example, a cross-sectional structure of the positive electrode active material can be observed with the SEM and can be calculated by an imaging process or the like. A known calculation method can be used for the calculation. The calculation method can be obtained by, for example, first observing the cross-sectional structures of a plurality of, for example, 100 or more of the positive electrode active material by the SEM, and comparing the cross-sectional structures using an average of the void fraction of the positive electrode active material that is a target.

Next, a configuration of the entire battery will be described.

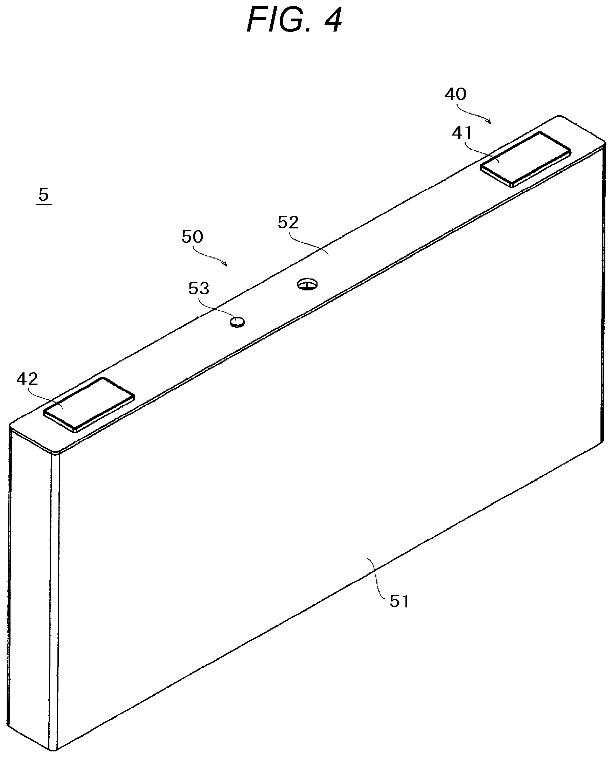

FIG. 4 is an external perspective view of a secondary battery.

The secondary battery is a flat rectangular parallelepiped and includes a first main surface having a large area, a second main surface facing the first main surface, a rectangular side surface, a rectangular bottom surface, and a rectangular lid 52. The long side of the lid 52 that is a rectangle is longer than the long side of the side that is a rectangle.

In other words, the first main surface or the second main surface having a large area is a rectangle and coincides with the long side of the lid whose long side is a rectangle, and coincides with the long side of the side whose short side is a rectangle. The ratio of the long side and the short side of the main surface is preferably 1.5 or more, and is preferably 4.0 or less in consideration of the ease of manufacture of the charge/discharge body 10 described below. More preferably 2.0 or more and 2.5 or less.

In FIG. 4, the negative electrode terminal 42 and the positive electrode terminal 41 are disposed at a distance on the lid 52. In the vicinity of the center of the lid 52, a cleavage valve is arranged to prevent the inside of the battery from becoming a high pressure. In addition, a sealing plug 53 for sealing the injection hole for injecting the electrolytic solution is disposed.

FIG. 8 is a perspective view of the charge/discharge body 10. In FIG. 8, the negative electrode 12 includes an elongated negative electrode current collector layer 12M and a negative electrode active material layer 12N bonded to the negative electrode current collector layer 12M. The negative electrode current collector 12M includes a current collector 12a and a negative electrode tab 12b. The negative electrode active material layers 12N are bonded to the current collector 12a. The negative electrode tab 12b protrudes in a short side direction of the current collector 12a from a side edge 12c along the long side direction of the current collector 12a. The negative electrode tab 12b protrudes in the same direction as the positive electrode tab 11b of the positive electrode 11 while being stacked with the positive electrode 11 via the separators 13. The negative electrode tab 12b is separated from the positive electrode tab 11b of the positive electrode 11 while being stacked with the positive electrode 11 via the separators 13. The negative electrode tab 12b is formed integrally with the current collector 12a. A plurality of negative electrode tab 12b are formed on one current collector 12a. The current collector 12a is formed of, for example, copper or a copper alloy. The negative electrode active material 12N includes a negative electrode active material composed of a carbon-based material, a binder, a conductive auxiliary agent, and the like. For example, a graphite is used as the carbon-based material.

The separator 13 allows lithium ions to pass therethrough while insulating between the positive electrode 11 and the negative electrode 12. The separator 13 is formed in an elongated shape. The separator 13 is made of a porous material. Polyethylene (PE: polyethylene) or polypropylene (PP: polypropylene) is used for the separators 13. The electrolyte includes an organic solvent, a support salt, and an additive. As the organic solvent, for example, a carbonate ester or the like is used. As the support salt, for example, a lithium salt is used.

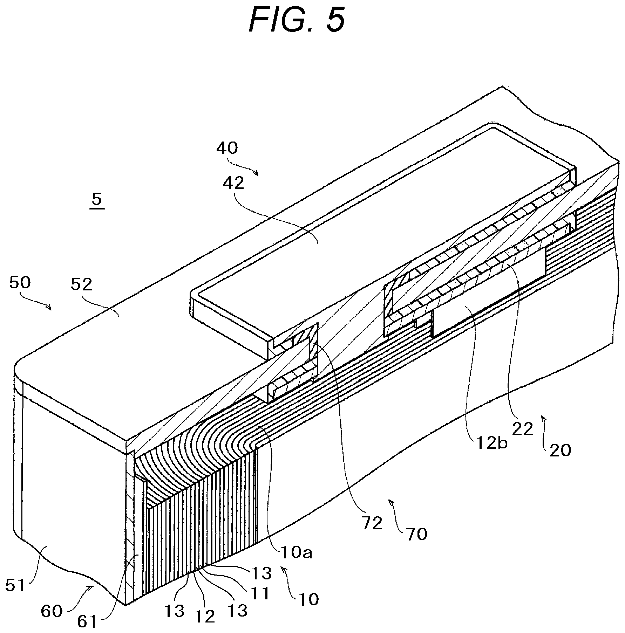

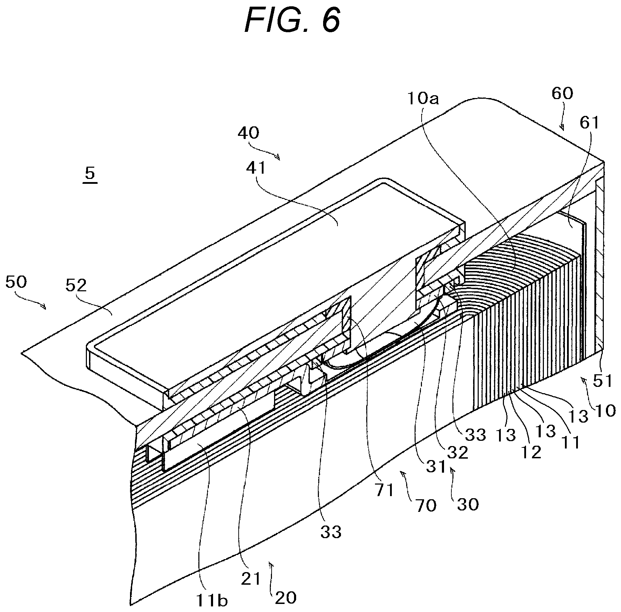

FIG. 5 is a cross-sectional perspective view of the vicinity of the negative electrode terminal 42, and FIG. 6 is a cross-sectional perspective view of the vicinity of the positive electrode terminal 41. The current collector 20 shown in FIGs. 5 and 6 is connected to the charge/discharge body 10. The current collector 20 includes a positive electrode current collector plate 21 and a negative electrode current collector plate 22.

In FIG. 5, the negative electrode current collector plate 22 conducts the negative electrode tab 12b of the charge/discharge member 10 and the negative electrode terminal 42. The negative electrode current collector plate 22 includes a rectangular plateshaped base portion 22a and an insert hole 22b through which the base portion 22a passes. The insertion portion 42b of the negative electrode terminal 42 is inserted into the insertion hole 22b of the negative electrode current collector plate 22. The negative electrode current collector plate 22 is formed of, for example, copper or a copper alloy. In FIG. 5, reference numeral 70 denotes a sealing body, and reference numeral 72 denotes a gasket.

FIG. 6 is a cross-sectional perspective view of the vicinity of the positive electrode terminal. In FIG. 6, a configuration including the current interrupter 30 makes the current collector 20 and the positive electrode terminal 41 conductive. The current blocking member 30 includes a diaphragm 31, a conductive member 32, and a pair of support bases 33.

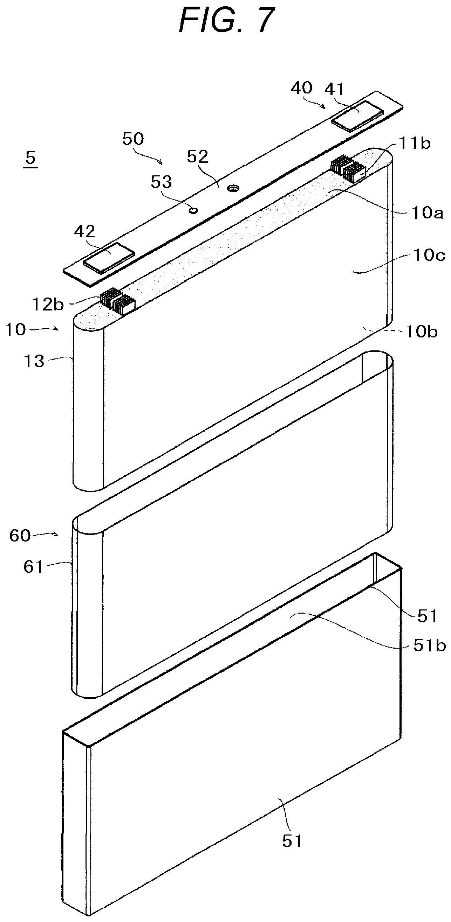

FIG. 7 is an exploded perspective view of the battery 5. In FIG. 7, the external terminal 40 is connected to the current collector 20 or the current interrupter 30. The external terminal 40 includes a positive electrode terminal 41 and a negative electrode terminal 42. In FIG. 7, component members of the battery 5 are accommodated or attached to the exterior body 50. The exterior body 50 includes a container 51, a lid 52, and a sealing plug 53.

The container 51 contains the charge/discharge body 10 and the like. The container 51 is formed of a rectangular metal can. The container 51 includes an opening 51a opened along a long side direction and a receiving portion 51b connected to the opening 51a. The container 51 is made of, for example, aluminum or an aluminum alloy.

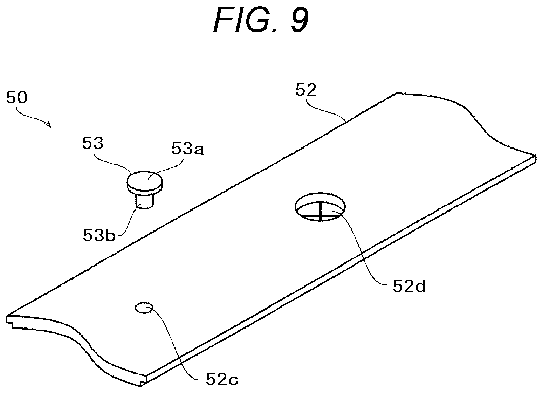

In FIGs. 7 and 9, a lid 52 seals the opening 51a of the container 51. The container 51 is formed of a metal plate having a long plate shape. In the lid 52, a positive electrode insertion hole 52a formed by a circular through-hole is formed at one end in the long side direction. The lid 52 has an insertion hole for liquid injection 52c formed by a circular through hole. An insertion portion 53b of the sealing plug 53 is inserted into the insertion hole for liquid injection 52c. The cap 52 is formed with a tear valve 52d at a center in a long side direction. The lid 52 is welded to the container 51. The lid 52 is made of, for example, aluminum or an aluminum alloy.

The sealing plug 53 seals the insertion hole for liquid injection 52c of the lid 52. The sealing plug 53 is formed in a cylindrical shape. The sealing plug 53 includes a head 53a having a relatively large outer diameter and an insertion portion 53b which is continuous with the head 53a and has a relatively small outer diameter. The head 53a of the sealing plug 53 is welded to the lid 52. The sealing plug 53 is made of, for example, aluminum or an aluminum alloy.

In FIG. 7, the insulator 60 insulates the constituent members of the battery 5 from the exterior body 50. The insulator 60 includes an insulating cover 61, a positive electrode side first insulating plate, a negative electrode side first insulating plate, a positive electrode side second insulating plate, and a negative electrode side second insulating plate.

The insulating cover 61 covers the charge/discharge body 10. The insulating cover 61 exposes one side portion 10a of the charge/discharge body 10 to the outside and covers a portion other than the one side portion 10a of the charge/discharge body 10. The insulating cover 61 is formed in, for example, a five-sided shape and is folded in a box shape. The insulating cover 61 is made of a polypropylene, for example.

As shown in FIG. 7, the side portion 10a of the charge/discharge body 10 are exposed. The positive electrode tab 11b and the positive electrode terminal 41 are disposed close to each other. In addition, the negative electrode tab 12b and the negative electrode terminal 42 are disposed close to each other. With such a configuration, by using the positive electrode active material according to the present disclosure, even in a case where the positive electrode mixture is densified, and heat flow between the charge/discharge body and the outside thereof is increased due to charging and discharging, heat transfer between the charge/discharge body and the outside thereof is facilitated. Therefore, the battery output can be stabilized.

### [Examples]

Hereinafter, the present disclosure will be described in detail with reference to Examples, but the present disclosure is not limited to these Examples. The following configurations are common to Examples 1 to 7 and Comparative Examples 1 to 3 unless otherwise specified. Li_{1.0}Ni_{0.6}Co_{0.2}Mn_{0.2}O₂ powder as a positive electrode active material, acetylene black as a conductive auxiliary agent, and polyvinylidene fluoride (PVdF) as a binder was prepared.

The positive electrode active material, the conductive agent and the binder were mixed in a weight ratio of 98 : 1 : 1. N-methyl-2-pyrrolidone (NMP) was added to the resulting mixture to adjust the viscosity, and a positive electrode slurry was obtained.

An aluminum foil having a thickness of 12 µm was prepared as a positive electrode current collector. A layer of the positive electrode slurry was formed by a simultaneous application of two layers (a front surface and a back surface) using the positive electrode slurry by a slot die coating method, leaving an uncoated portion which is to be a welded portion (positive electrode current collector exposed portion) on both surfaces of the positive electrode current collector. Next, the layer of the positive electrode slurry was dried and pressed to form a positive electrode active material layer 11N, thereby producing a positive electrode.

Pitch-coated natural graphite particles (negative electrode active material A) and artificial graphite particles (negative electrode active material B) as a negative electrode active material, styrene-butadiene rubber (SBR) as a binder, and carboxymethyl cellulose (CMC) as a dispersant were prepared.

The negative electrode active material A, the negative electrode active material B, the binder and the dispersant were mixed so that (the total of the negative electrode active material A and the negative electrode active material B) : (binder) : (dispersant) was in a weight ratio of 100 : 1 : 1. An ionexchanged water was added to the obtained mixture to adjust the viscosity, and a negative electrode slurry was obtained.

A layer of the negative electrode slurry was formed by the simultaneous application of two layers (a front surface and a back surface) using the negative electrode slurry by the slot die coating method, leaving an uncoated portion which is to be a welded portion (negative electrode current collector exposed portion) on both surfaces of a copper foil having a thickness of 10 µm. Next, the layer of the negative electrode slurry was dried and pressed to form a negative electrode active material layer 12N, thereby producing a negative electrode.

Subsequently, a separator 13 was sandwiched between the prepared positive electrode 11 and negative electrode 12, and a charge/discharge body 10 was produced with a configuration as shown in FIG. 8. The positive electrode side connecting end portion and the negative electrode side connecting end portion of the positive electrode current collector plate 21 and the negative electrode current collector plate 22 connected to the lid 52, and the uncoated portion (positive electrode current collector exposed portion and negative electrode current collector exposed portion) of the charge/discharge body 10 were welded, the charge/discharge body 10 was covered with an insulating protective film, sealed in the container 51, and the lid 52 and the container 51 were welded.

Subsequently, an electrolyte solution was prepared as a non-aqueous electrolyte, the electrolyte solution being obtained by dissolving LiPF₆ at a concentration of a 1.0 mol/L in a solvent obtained by mixing ethylene carbonate (EC) and dimethyl carbonate (DMC) in a volume ratio of 1 : 2. The prepared electrolytic solution was injected from the injection port, and then sealed with an injection stopper to prepare the lithium ion secondary battery.

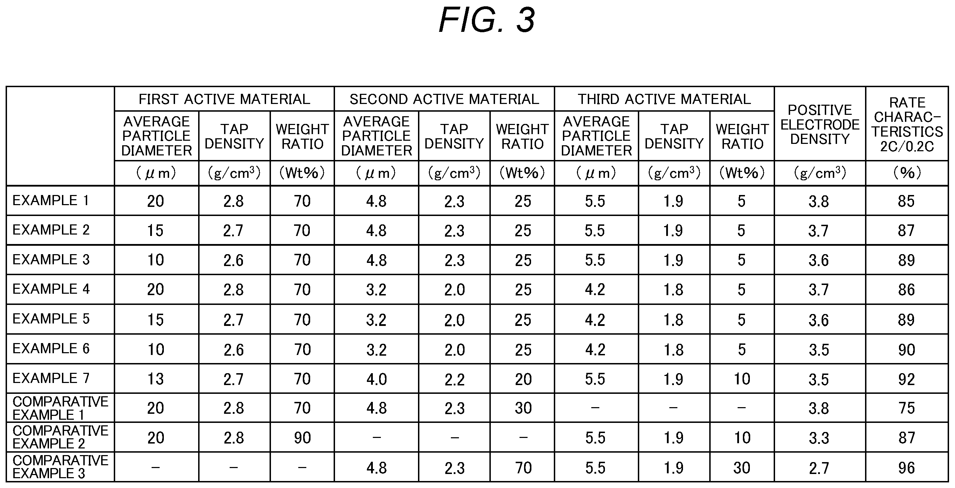

The differences in the configurations of Examples 1 to 7 and Comparative Examples 1 to 3 are shown in the table of FIG. 3. That is, in Examples 1 to 7, three types of active materials of the first active material 1, the second active material 2 and the third active material 3 are blended in various combinations as the positive electrode mixture. On the other hand, in the comparative example, only two types of active materials are used. That is, the first active material 1 and the second active material 2 are used in Comparative Example 1, the first active material 1 and the third active material 3 are used in Comparative Example 2, and the second active material 2 and the third active material 3 is used in Comparative Example 3. In FIG. 3, the energy density of the battery, that is, the positive electrode density and the rate characteristics, that is, (2C/0.2C) are evaluated as the battery performance for these Examples and Comparative Examples.

The positive electrode density in FIG. 3 was measured as follows. That is, after the positive electrode was pressed, the positive electrode was punched out with an area of a predetermined size, and the weight and the thickness were measured to calculate the positive electrode density.

The rate characteristics in FIG. 3 were measured as follows. That is, the lithium ion secondary battery thus prepared was initialized by charging and discharging, and then the battery capacities of 0.2C and 2C were measured. Thereafter, a constant voltage-constant current charging (CC-CV charging) was performed at a charging current 1C for a total of 2.5 hours until the battery voltage became 4.2 V. After 30 minutes of pause, a constant current discharge (CC discharge) was performed at a discharge current 0.1C up to a cell voltage 2.7 V to obtain an initial capacity. After charging under the same charging conditions, the discharging current was changed from 0.1C to 0.2C and 2C, and the battery capacities of 0.2C and 2C were measured. The rate characteristic (2C/0.2C) shown in FIG. 3 is the ratio of 2C battery capacity to 0.2C battery capacity.

As the battery performance, both the positive electrode density and the rate characteristic (2C/0.2C) are better, but even if the performance of either the positive electrode density or the rate characteristic is excellent, if the other performance is poor, the battery performance becomes unbalanced and the performance as a battery becomes insufficient. The present disclosure is directed to a battery having the positive electrode density of 3.5 g/cm³ or more and the rate characteristic (2C/0.2C) of 85 % or more.

In Examples 1 to 7, the weight ratio of each active material in Examples 1 to 6 is 70 % for the first active material 1, 25 % for the second active material 2, and 5 % for the third active material 3, and in Example 7, 70 % for the first active material 1, 20 % for the second active material 2, and 10 % for the third active material 3. As shown in FIG. 3, in Examples 1 to 7, the battery performance is evaluated by changing the average particle diameters of the first active material 1, the second active material 2 and the third active material 3 and the tap density, and the combination thereof.

In FIG. 3, in Examples 1 to 7, an average particle diameter of the first active material 1 is 10 to 20 micrometers, and the tap density is 2.6 to 2.8 g/cm³. The second active material 2 has the average particle diameter of 3.2 to 4.8 micrometers and the tap density of 2.0 to 2.3 g/cm³. The third active material 3 has the average particle diameter of 10 to 20 micrometers and the tap density of 1.8 to 1.9 g/cm³. That is, the particle diameter of the first active material 1 is in the range of 10 µm to 20 µm, the particle diameter of the second active material 2 is in the range of 3 to 5 µm, and (the particle diameter of the third active material) > (the particle diameter of the second active material). In each of the embodiments, the relationship of (the weight of the first active material) > (the weight of the second active material) > (the weight of the third active material) is satisfied.

As shown in FIG. 3, Examples 1 to 7 satisfy a target performance of the present disclosure in both the positive electrode density and the rate characteristics. That is, all of the Examples has a positive electrode density 3.5 g/cm³ or higher and a 2C/0.2C of 85 % or higher. Therefore, a battery having a high energy density and excellent input/output characteristics can be realized.

On the other hand, in Comparative Example 1, two types of the first active material 1 and the second active material 2 are used as the positive electrode active material. In Comparative Example 1, the positive electrode density is 3.8 g/cm³, but 2C/0.2C is 75 %, which is insufficient. In Comparative Example 2, two types of the first active material 1 and the third active material 3 are used as the positive electrode active material. In Comparative Example 2, 2C/0.2C is 87 %, which is acceptable, but the positive electrode density is 3.3 g/cm³, which is insufficient. In Comparative Example 3, two types of the second active material 2 and the third active material 3 are used as the positive electrode active material. In Comparative Example 3, the rate characteristics (2C/0.2C) was 96 %, which was very high, but the positive electrode density was as low as 2.7 g/cm³, which was insufficient. As described above, in the Comparative Examples in which only two types of active materials are used, the battery having the allowable range in both the positive electrode density and the rate characteristics cannot be realized.

As described above, according to the present disclosure, including Examples 1 to 7, it is possible to realize excellent batteries with high performance and well-balanced characteristics in both of the positive electrode density and the rate characteristics (2C/0.2C). In other words, it is possible to realize a battery having excellent energy density and excellent input/output characteristics.

The battery of the present disclosure is not limited to the configuration described in the embodiment, and can be appropriately configured based on the contents described in the claims. Further, the battery of the present disclosure is not limited to a lithium ion battery. The battery of the present disclosure can be applied to, for example, a nickel-metal hydride battery or a lead battery. The battery of the present disclosure is not limited to a secondary battery. The battery of the present disclosure can be applied to a primary battery. The charge/discharge body of the battery of the present disclosure is not limited to a winding-type charge/discharge body in which a positive electrode, a separator, and a negative electrode formed in an elongated shape are bundled and wound.

In the charge/discharge body of the battery of the present disclosure, a stacked type in which a plurality of positive electrodes, a plurality of separators, and a plurality of negative electrodes formed in a rectangular shape are alternately stacked can be applied. In the charge/discharge body of the battery of the present disclosure, it is possible to apply a stacked type in which a plurality of positive electrodes and a plurality of negative electrodes formed in a relatively short shape are alternately provided to one separator formed in a long shape while being opposed to each other via a separator. In the charge/discharge body having such a configuration, the positive electrode and the negative electrode face each other via the separator by folding and stacking the separators. The battery of the present disclosure is not limited to a configuration in which the charge/discharge body is sealed with a container and a lid. The battery of the present disclosure can be applied to a configuration in which a charge/discharge body is sealed with a laminate film.

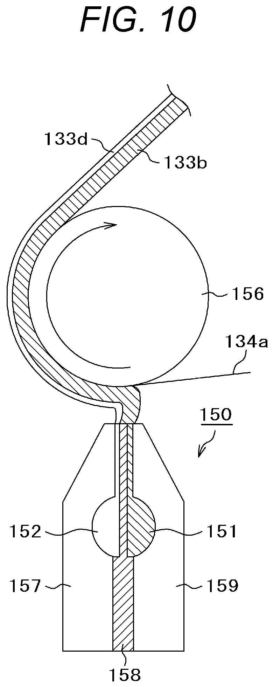

Hereinafter, another manufacturing method of the positive electrode will be described. As the method for manufacturing the positive electrode according to the embodiment, a manufacturing method in which the positive electrode first active material layer and the positive electrode second active material layer of the positive electrode active material layer are simultaneously coated may be used. Hereinafter, this manufacturing method will be described with reference to FIG. 10.

In this manufacturing method, materials (for example, a positive electrode active material, a conductive auxiliary agent, a binder, or the like) included in the positive electrode first active material layer is prepared. These materials are mixed and the resulting mixture is dispersed in a solvent (e.g., N-methyl-2-pyrrolidone (NMP) and/or water) to obtain a positive electrode first slurry. Further, materials (for example, a positive electrode active material, a conductive auxiliary agent, a binder, or the like) included in the positive electrode second active material layer is prepared. These materials are mixed and the resulting mixture is dispersed in a solvent (e.g., N-methyl-2-pyrrolidone (NMP) and/or water) to obtain a positive electrode second slurry.

Next, for example, the positive electrode first slurry and the positive electrode second slurry are simultaneously applied onto the positive electrode current collector 134a using the die head 150 as shown in FIG. 10. The die head 150 has an outbound block 157, a three-dimensional shim 158, and an inbound block 159. Inside the die head 150, a manifold 152 for the positive electrode second slurry and a manifold 151 for the positive electrode first slurry are provided. The positive electrode second slurry and the positive electrode first slurry are simultaneously discharged from the manifolds 152 and 151 toward the positive electrode current collector 134a conveyed along a back roller 156. Thereby, the positive electrode second slurry layer 133d and the positive electrode first slurry layer 133b are formed. Next, the positive electrode first slurry layer 133b and the positive electrode second slurry layer 133d are dried by volatilizing the solvents contained in the positive electrode first slurry layer 133b and the positive electrode second slurry layer 133d in a drying oven or the like. Thereby, a positive electrode first active material layer (not shown) and a positive electrode second active material layer (not shown) are formed on one surface of the positive electrode current collector 134a. Next, the positive electrode current collector 134a, the positive electrode first active material layer, and the positive electrode second active material layer are press-processed. Specifically, a stack including the positive electrode current collector 134a, the positive electrode first active material layer, and the positive electrode second active material layer is sandwiched between rollers heated to 60 to 120 °C. and pressed. Thereafter, the stack is slit to a predetermined width. Thereby, a positive electrode is obtained.

In the battery including the positive electrode manufactured by the manufacturing process to which the above-mentioned simultaneous coating of the two layers is applied, since the interface between the positive electrode first slurry layer 133b and the positive electrode second slurry layer 133d has the uneven shape, the adhesion of the positive electrode first slurry layer 133b and the positive electrode second slurry layer 133d is improved, and the reliability of the battery can be improved without peeling off the two layers even if the volume change caused by charging and discharging occurs.

The present disclosure can also be applied to a solid state battery. That is, the battery according to the embodiment may be a battery including a solid electrolyte as an electrolyte, and may include a positive electrode, a negative electrode, and a solid electrolyte layer including a solid electrolyte, and a charge/discharge body in which the solid electrolyte layer is interposed between the positive electrode and the negative electrode.

For example, each of the positive electrode electronic insulating layer and the negative electrode electronic insulating layer includes a solid electrolyte. Each of the positive electrode electronic insulating particles and the negative electrode electronic insulating particles is a solid electrolyte particle. The battery including such a solid electrolyte does not need to include an electrolyte solution, and thus safety can be enhanced.

Examples of solid electrolytes include sulphide-based solid electrolytes, such as Li₁₀GeP₂S₁₂, Li₆PS₅Cl and Li₂S-P₂S₅ glasses, Li₂S-SiS₂ glasses, Li₂S-P₂S₅-GeS₂ glasses, Li₂S-B₂S₃ glasses, oxidebased solid electrolytes, such as Li₇La₃Zr₂O₁₂, LiLaTiO₃, LiTi(PO₄)₃, LiGe(PO₄)₃ and complex hydride-based solid electrolytes, such as LiBH₄-LiI, LiBH₄-LiNH₂, and mixtures of two or more of these.

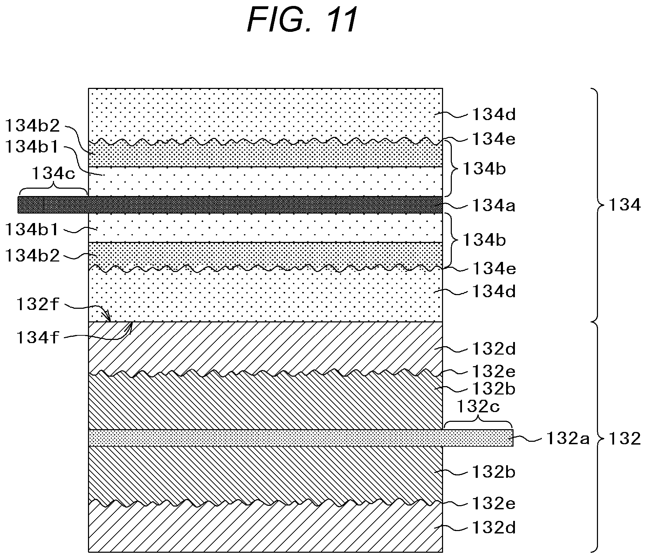

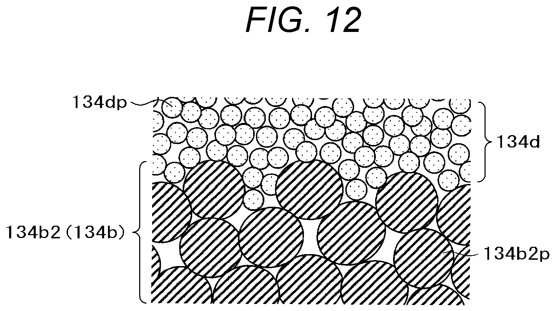

Furthermore, the present disclosure can also be used for separatorless batteries. Hereinafter, a configuration of such a separatorless battery will be described with reference to FIGS. 11 and 12.

As shown in FIG. 11, in a separatorless battery (lithium ion secondary battery) including the positive electrode 134 according to another embodiment, the positive electrode 134 includes a positive electrode current collector 134a, a positive electrode first active material layers 134b1 bonded to both surfaces of the positive electrode current collector 134a, positive electrode second active material layers 134b2 bonded to the respective positive electrode first active material layers 134b1, and positive electrode electronic insulating layers 134d bonded to the respective positive electrode second active material layers 134b2. The negative electrode 132 includes a negative electrode current collector 132a, negative electrode active material layers 132b bonded to both surfaces of the negative electrode current collector 132a, and negative electrode electronic insulating layer 132d bonded to the respective negative electrode active material layers 132b.

One end of the positive electrode current collector 134a is provided with a positive electrode current collector exposed portion 134c which is a part not covered with either of the positive electrode active material layer 134b including the positive electrode first active material layer 134b1 and the positive electrode second active material layer 134b2 or the positive electrode electronic insulating layer 134d. The positive electrode current collector exposed portion 134c is provided at an end face and its vicinity of a wound group (not shown). The positive electrode current collector exposed portion 134c faces and is electrically connected to a positive electrode side connecting end portion (not shown) of a positive electrode current collector plate (not shown). Similarly, one end of the negative electrode current collector 132a is provided with a negative electrode current collector exposed portion 132c which is a part not covered by either of the negative electrode active material layer 132b or the negative electrode electronic insulating layer 132d. The negative electrode current collector exposed portion 132c is provided at and near the end face of the wound group. The negative electrode current collector exposed portion 132c faces and is electrically connected to a negative electrode side connecting end portion (not shown) of a negative electrode current collector plate (not shown).

The positive electrode electronic insulating layer 134d and the negative electrode electronic insulating layer 132d have a function of preventing a short circuit between the positive electrode active material layer 134b and the negative electrode active material layer 132b, and a function of conducting ions between the positive electrode active material layer 134b and the negative electrode active material layer 132b. The positive electrode electronic insulating layer 134d and the negative electrode electronic insulating layer 132d may be porous layers made of an electrically insulating (i.e., electronically insulating and ionically insulating) material. The porous layers can retain the electrolyte in the pores thereof, and can conduct ions between the positive electrode active material layer 134b and the negative electrode active material layer 132b through the electrolyte.

The porous positive electrode electronic insulating layer 134d and the negative electrode electronic insulating layer 132d may also have a function of buffering expansion and contraction of the positive electrode active material layer 134b and the negative electrode active material layer 132b due to charging and discharging of the lithium ion secondary battery. The expansion and contraction of the negative electrode active material layer 132b due to charging and discharging of the battery is usually larger than the expansion and contraction of the positive electrode active material layer 134b. Therefore, the negative electrode electronic insulating layer 132d may have an average pore diameter larger than the average pore diameter of the positive electrode electronic insulating layer 134d so that the expansion and contraction of the larger negative electrode active material layer 132b can be buffered. In the present disclosure, the average pore diameters of the positive electrode electronic insulating layer 134d and the negative electrode electronic insulating layer 132d mean an average pore diameter on a volume basis measured by a mercury intrusion porosimetry.

Based on the weights of the positive electrode electronic insulating layer 134d and the negative electrode electronic insulating layer 132d, the sum of Na and Fe contents of the positive electrode electronic insulating layer 134d and the negative electrode electronic insulating layer 132d may be 300 ppm or less. The amounts of the respective elements contained in the positive electrode electronic insulating layer 134d and the negative electrode electronic insulating layer 132d can be measured by ICP (Inductive Coupled Plasma) method.

The positive electrode electronic insulating layer 134d may include positive electrode electronic insulating particles, and the negative electrode electronic insulating layer 132d may include negative electrode electronic insulating particles. Hereinafter, the positive electrode electronic insulating particles and the negative electrode electronic insulating particles are collectively referred to as electronic insulating particles as appropriate. The electronic insulating particles may be electrical insulating particles. Examples of the electrical insulating particles include ceramic particles. The ceramic particles may contain at least one selected from the group consisting of alumina (Al₂O₃), boehmite (Al₂O₃ hydrate), magnesia (MgO), zirconia (ZrO₂), titania (TiO₂), iron oxide, silica (SiO₂), and barium titanate (BaTiO₂), and preferably contain at least one selected from the group consisting of alumina, boehmite, magnesia, zirconia, and titania. The electronic insulating particles may have an average particle diameter in the range of 0.7 to 1.1 µm. The average particle diameter of the electronic insulating particles can be obtained by calculating the arithmetic average of the projected area circle equivalent diameters of the 100 or more electronic insulating particles selected at random based on the microscopic observation images of the positive electrode electronic insulating layer 134d and the negative electrode electronic insulating layer 132d. The electronic insulating particles may contain at least one of Na of 100 to 200 ppm, Fe of 50 to 100 ppm or Ca of 50 to 100 ppm, based on the weight of the electronic insulating particles.

The positive electrode electronic insulating layer 134d and the negative electrode electronic insulating layer 132d may further include a binder. The binder may be dispersed or dissolved in an aqueous solvent or a non-aqueous solvent (e.g., N-methyl-2-pyrrolidone (NMP)), and may contain, for example, at least one selected from the group consisting of polyvinylidene fluoride (PVDF), polytetrafluoroethylene (PTFE), polyacrylic acid (PAA), and carboxymethylcellulose (CMC).

The positive electrode electronic insulating layer 134d and the negative electrode electronic insulating layer 132d may further include a dispersant. The dispersant may contain at least one selected from the group consisting of a carboxylic acid compound and a phosphoric acid compound.

An interface 134e between the positive electrode electronic insulating layer 134d and the positive electrode active material layer 134b has an uneven configuration, and the uneven height thereof is 2 µm or more, preferably 2 to 4 µm. An interface 132e between the negative electrode electronic insulating layer 132d and the negative electrode active material layer 132b has an uneven configuration, and the uneven height thereof is 2 µm or more, preferably 2 to 4 µm. The adhesion between the positive electrode electronic insulating layer 134d and the positive electrode active material layer 134b and the adhesion between the negative electrode electronic insulating layer 132b and the negative electrode active material layer 132d and between the negative electrode electronic insulating layer 132d and the negative electrode active material layer 132b can be improved because the uneven height of the interface 132e between the positive electrode electronic insulating layer 134d and the positive electrode active material layer 134b is 2 µm or more. Accordingly, it is possible to prevent or reduce the separation of the positive electrode electronic insulating layer 134d and the negative electrode electronic insulating layer 132d from the positive electrode active material layer 134b and the negative electrode active material layer 132b, respectively, and to improve the reliability of the lithium ion secondary battery.

The uneven height of the interface 134e between the positive electrode second active material layer 134b2 (positive electrode active material layer 134b) and the positive electrode electronic insulating layer 134d can be controlled by, for example, the particle diameters of the positive electrode active material particles and the positive electrode electronic insulating particles. As shown in FIG. 12, when the average particle diameter of the positive electrode second active material particle 134b2p (positive electrode second active material) included in the positive electrode second active material layer 134b2 is larger than the average particle diameter of the positive electrode electron insulating particle 134dp, the positive electrode electron insulating particle 134dp enters a gap between the positive electrode first active material 134b1p, and the interface 134e between the positive electrode active material layer 134b and the positive electrode electronic insulating layer 134d becomes uneven. For example, by using the spherical positive electrode first active material 134blp having an average particle diameter in the range of 4.5 to 5.5 µm and the positive electrode electron insulating particle 134dp having an average particle diameter in the range of 0.7 to 1.1 µm, the uneven height of the interface 134e between the positive electrode active material layer 134b and the positive electrode electronic insulating layer 134d can be set to 2 µm or more, preferably 2 to 4 µm.

Similarly, the uneven height of the interface 132e between the negative electrode active material layer 132b and the negative electrode electronic insulating layer 132d can be controlled by the particle diameters of the negative electrode active material particles and the negative electrode electronic insulating particles. For example, by using scale negative electrode active material particles having an average particle diameter in a range of 9 to 11 µm and negative electrode electronic insulating particles having an average particle diameter in a range of 0.7 to 1.1 µm, the uneven height of the interface 132e between the negative electrode active material layer 132b and the negative electrode electronic insulating layer 132d can be set to 2 µm or more, preferably 2 to 4 µm.

The interface 134e between the positive electrode electronic insulating layer 134d and the positive electrode active material layer 134b and the uneven height of the interface 132e between the negative electrode active material layer 132b and the negative electrode electronic insulating layer 132d are measured as follows. A scanning electron microscopy (SEM) obtains cross-sectional SEM images of any three positions of the positive electrode 134 or the negative electrode 132, and measures, in each of the cross-sectional SEM images, a distance from any ten or more points on the interface 134e, 132e to a predetermined reference plane (for example, a distance from any ten or more points on the interface 134e, 132e to the surface 134f of the positive electrode electronic insulating layer 134d, a distance from 132f of the negative electrode electronic insulating layer 132d, that is, a thickness of the positive electrode electronic insulating layer 134d and a thickness of the negative electrode electronic insulating layer 132d at any ten or more points). A standard deviation of the obtained distance value is defined as the uneven height of the interface 134e, 132e. In addition, the surface 134f of the positive electrode electronic insulating layer 134d and the surface 132f of the negative electrode electronic insulating layer 132d are surfaces facing each other, and may be sufficiently flat as compared with the interface 134e, 132e. For example, the uneven height of the front surface 134f, 132f of the positive electrode electronic insulating layer 134d and the negative electrode electronic insulating layer 132d may be 1/10 or less of the uneven height of the interface 134e, 132e, respectively.

The phrase "the interface 134d between the positive electrode electronic insulating layer 134b and the positive electrode active material layer 134e has an uneven configuration" may be replaced with "the positive electrode mixed layer including the positive electrode active material and the electronic insulating material between the positive electrode electronic insulating layer 134d and the positive electrode active material layer 134b." Similarly, the phrase "the interface 132d between the negative electrode electronic insulating layer 132b and the negative electrode active material layer 132e has an uneven configuration" can be referred to as "the negative electrode mixed layer including the negative electrode active material and the electron insulating material between the negative electrode electronic insulating layer 132d and the negative electrode active material layer 132b." The thickness of the positive electrode mixed layer is 2 µm or more, preferably in the range of 2 to 4 µm. The thickness of the negative electrode mixed layer is 2 µm or more, preferably in the range of 2 to 4 µm. The thicknesses of the positive electrode mixed layer and the negative electrode mixed layer can be measured in the same manner as the interface 134e between the positive electrode electronic insulating layer 134d and the positive electrode active material layer 134b and the uneven height of the interface 132e between the negative electrode electronic insulating layer 132d and the negative electrode active material layer 132b described above.

The positive electrode electronic insulating layer 134d and the negative electrode electronic insulating layer 132d may be contacted with each other. Preferably, the positive electrode electronic insulating layer 134d and the negative electrode electronic insulating layer 132d may be contacted with each other without being fixed. Since the positive electrode electronic insulating layer 134d and the negative electrode electronic insulating layer 132d are not fixed to each other, a stress caused by expansion and contraction of the negative electrode active material layer 132b and the positive electrode active material layer 134b due to charge and discharge of the lithium ion secondary battery can be relaxed, and dendrites that can cause a short circuit between the positive electrode active material layer 134b and the negative electrode active material layer 132b can be prevented or reduced from growing through the positive electrode electronic insulating layer 134d and the negative electrode electronic insulating layer 132d.

The peel strength of the positive electrode electronic insulating layer 134d with respect to the positive electrode active material layer 134b and the peel strength of the negative electrode electronic insulating layer 132d with respect to the negative electrode active material layer 132b may be greater than the peel strength of the positive electrode electronic insulating layer 134d with respect to the negative electrode electronic insulating layer 132d. A peel strength can be measured, for example, in a 180° tape peeling test according to JIS C 0806-3 1999.

The uneven height of the interface 134e between the positive electrode active material layer 134b and the positive electrode electronic insulating layer 134d can be controlled by the types and viscosities of the solvents of the positive electrode mixture slurry and the positive electrode electronic insulating material slurry in addition to the particle diameters of the positive electrode active material particles and the positive electrode electronic insulating particles described above. Similarly, the uneven height of the interface 132e between the negative electrode active material layer 132b and the negative electrode electronic insulating layer 132d can also be controlled by the type and viscosity of the solvents of the negative electrode mixture slurry and the negative electrode electronic insulating material slurry.

The average pore diameters of the positive electrode electronic insulating layer 134d and the negative electrode electronic insulating layer 132d can be controlled by the particle diameter of the electronic insulating particles, the press pressure in the press processing, and the like. Specifically, the higher the pressing pressure, the smaller the average pore diameter, and the smaller the particle diameter of the electronic insulating particles, the smaller the average pore diameter.

In the separatorless battery including the positive electrode 134 of the other example described above, since the strength of the electronic insulating layer is higher than that of the separator, the safety of the battery is improved.

Further, in the variation of the separatorless battery including the positive electrode 134 of the other example described above, each of the positive electrode electronic insulating layer 134d and the negative electrode electronic insulating layer 132d is a layer including a solid electrolyte (that is, an electronically insulating and ionically conductive material). Since the battery (lithium ion secondary battery) of this modification does not need to include an electrolyte solution, safety can be improved. In this modification, the electronic insulating particles included in the positive electrode electronic insulating layer 134d and the negative electrode electronic insulating layer 132d may be solid electrolyte particles. Since the solid electrolyte can be satisfactorily formed by press forming, it is not essential that the positive electrode electronic insulating layer 134d and the negative electrode electronic insulating layer 132d contain a binder and a dispersant.

Further, at least one of the positive electrode first active material layer 134b1 and the positive electrode second active material layer 134b2 included in the positive electrode active material layer 134b may further contain a solid electrolyte in addition to the active material and an optional binder, a conductive auxiliary agent, and a dispersant. Accordingly, the ionic conductivity of at least one of the positive electrode first active material layer 134b1 and the positive electrode second active material layer 134b2 can be improved.

The negative electrode active material layer 132b may further contain a solid electrolyte in addition to the electrode active material and an optional binder, a conductive auxiliary agent, and a dispersant. Accordingly, the ionic conductivity of the negative electrode active material 132b can be improved.

In the battery of the modified example described above, since it is not necessary to include the electrolyte solution and the strength of the electronic insulating layer is higher than that of the separator, safety can be enhanced. The battery includes a positive electrode including a positive electrode current collector, a positive electrode mixture layer provided on the positive electrode current collector, and a positive electrode electronic insulating layer provided on the positive electrode mixture layer, and a negative electrode including a negative electrode current collector, a negative electrode mixture layer provided on the negative electrode current collector, and a negative electrode electronic insulating layer provided on the negative electrode mixture layer, in which the positive electrode electronic insulating layer and the negative electrode electronic insulating layer are in contact with each other. Further, the positive electrode electronic insulating layer and the negative electrode electronic insulating layer are in contact with each other without being fixed.

The positive electrode according to another example of the embodiment can be manufactured by the simultaneous coating of the positive electrode first active material layer, the positive electrode second active material layer, and the positive electrode electronic insulating layer of the positive electrode active material layer, for example, in the following manner. First, materials (for example, a positive electrode active material, a conductive auxiliary agent, a binder, or the like) included in the positive electrode first active material layer are prepared. These material are mixed and the resulting mixture is dispersed in a solvent (e.g., N-methyl-2-pyrrolidone (NMP) and/or water) to obtain a positive electrode first slurry. Further, materials (for example, a positive electrode active material, a conductive auxiliary agent, a binder, or the like) included in the positive electrode second active material layer are prepared. These material are mixed and the resulting mixture is dispersed in a solvent (e.g., N-methyl-2-pyrrolidone (NMP) and/or water) to obtain a positive electrode second slurry. Further, materials (for example, positive electrode electronic insulating particles, binders, dispersants, and the like) included in the positive electrode electronic insulating layer 134d are prepared. These material is mixed and the resulting mixture is dispersed in a solvent (e.g., N-methyl-2-pyrrolidone (NMP) and/or water) to obtain a positive electrode electronic insulator slurry.

Next, the positive electrode first slurry, the positive electrode second slurry, and the positive electrode electronic insulating material slurry are simultaneously coated on the positive electrode current collector. As a result, the positive electrode second slurry layer, the positive electrode first slurry layer, and the positive electrode electronic insulating material slurry layer are formed. Next, the solvent contained in the positive electrode second slurry layer, the positive electrode first slurry layer, and the positive electrode electronic insulating material slurry layer is volatilized by a drying furnace or the like, and the positive electrode second slurry layer, the positive electrode first slurry layer, and the positive electrode electronic insulating material slurry layer are dried. Accordingly, the positive electrode first active material layer, the positive electrode second active material layer, and the positive electrode electronic insulating layer are formed on one surface of the positive electrode current collector. Next, the positive electrode current collector, the positive electrode first active material layer, the positive electrode second active material layer, and the positive electrode electronic insulating layer are press-processed. Specifically, a stack including a positive electrode current collector, a positive electrode first active material layer, a positive electrode second active material layer, and a positive electrode electronic insulating layer is sandwiched between rollers heated to 60 to 120 °C. and subjected to pressure. Thereafter, the stack is slit to a predetermined width. Thereby, a positive electrode is obtained.

In a battery including a positive electrode manufactured by a manufacturing method to which the simultaneous coating of three or more layers is applied, it is not necessary to include an electrolytic solution, and since the battery is firmly adhered because it has unevenness at the interface of each layer, high safety and reliability can be obtained.

### Reference Signs List

1... first active material, 2... second active material, 3... third active material, 5... battery, 10... charge/discharge body, 10a... side portion, 11... positive electrode, 11a... current collecting portion, 11b... positive electrode tab, 11c... side edge, 11M... positive electrode current collecting layer, 11N... positive electrode active material layer, 12... negative electrode, 12a... current collecting portion, 12b... negative electrode tab, 12c... side edge, 12M... negative electrode current collecting layer, 12N... negative electrode active material layer, 13... separator, 20... current collector, 21... positive electrode current collecting plate, 22... negative electrode current collecting plate, 30... current interrupter, 40... external terminal, 50... exterior body, 60... insulator, 70... sealing body.

## Claims

1. A secondary battery in which a positive electrode including a positive electrode active material and a negative electrode including a negative electrode active material are stacked,
wherein the positive electrode active material includes a mixture of a first active material having an average particle diameter (D50, a median diameter) of 10 to 20 µm, a second active material having the average particle diameter (D50, the median diameter) of 3 to 5 µm, and a third active material having the average particle diameter (D50, the median diameter) larger than that of the second active material and having a tap density lower than that of the second active material.

2. The secondary battery according to claim 1,
wherein a positive electrode active material layer has a configuration that the positive electrode active material is mixed such that the weight ratio is (the first active material) > (the second active material) > (the third active material).

3. The secondary battery according to claim 1,
wherein the second active material and the third active material are formed of different material compositions.

4. The secondary battery according to claim 1,
wherein a charge/discharge body in which the positive electrode and the negative electrode are stacked has an exposed first side portion, and a first tab connected to the positive electrode and a second tab connected to the negative electrode are present on the first side portion,
the charge/discharge body is contained in a battery container having a plurality of surfaces including a first surface,
a first terminal and a second terminal are disposed on the first surface,
and the first surface and the first side portion face each other.

5. The secondary battery according to claim 4,
wherein the charge/discharge body has a main surface having a long side and a short side,
and the first side portion is present on the long side.

6. A method for manufacturing a secondary battery in which a positive electrode including a positive electrode active material and a negative electrode including a negative electrode active material are stacked with a separator interposed therebetween,
the method comprising a step of:
forming a positive electrode active material by mixing a first active material having an average particle diameter (D50, a median diameter) of 10 to 20 µm, a second active material having the average particle diameter (D50, the median diameter) of 3 to 5 µm, and a third active material having the average particle diameter (D50, the median diameter) larger than that of the second active material and having a tap density lower than that of the second active material.

7. The method for manufacturing the secondary battery according to claim 6,
wherein a positive electrode active material layer is formed by mixing the positive electrode active material such that the weight ratio is (the first active material) > (the second active material) > (the third active material).

8. The method for manufacturing the secondary battery according to claim 7,
wherein the second active material and the third active material are formed of different material compositions.
